# EUROPÄISCHE PATENTANMELDUNG

(11) **EP 1 161 987 A2**
(43) Veröffentlichungstag der Anmeldung: **12.12.2001**
(21) Anmeldenummer: 01113877.3
(22) Anmeldetag: 07.06.2001
(51) Int. Cl.: B01J 19/00

(54) **Vorrichtung und Verfahren zur Herstellung einer Vorrichtung zur katalytischen Wasserstofferzeugung aus Kohlenwasserstoffen**

(30) Priorität: 10.06.2000 DE 10028865
(71) Anmelder: XCELLSIS GmbH, 73230 Kirchheim/Teck-Nabern (DE)
(72) Erfinder: Bass, Johanna, Dr., 73252 Lenningen (DE); Cwik, Roland, 86153 Augsburg (DE); Stefanovski, Thomas, 71034 Böblingen (DE)
(74) Vertreter: Dahmen, Toni, Dipl.-Ing.

(57) **Zusammenfassung**

Die Erfindung betrifft eine Vorrichtung und ein Verfahren zur Herstellung einer Vorrichtung zur katalytischen Wasserstofferzeugung aus Kohlenwasserstoffen, die einen Katalysator und im Katalysator ausgebildete Zuführungen und Verteilungskanälen für Edukte sowie Ableitungen und Sammelkanälen für Produkte umfaßt, wobei die Zuführungen und Verteilungskanäle für die Edukte sowie die Ableitungen und Sammelkanäle für die Produkte aus einer Mehrzahl gleich strukturierter Kanäle gebildet sind. Dabei werden Einlaßkanäle zum Zuführen und Verteilen von Edukten und Auslaßkanäle zum Sammeln und Ableiten von Produkten durch jeweils invers angeordnete geschlossene und offene Kanalenden bestimmt und die Einlaß- und Auslaßkanäle erstrecken sich im wesentlichen über den gesamten Katalysator und sind in wechselseitig ineinandergreifender Anordnung vorgesehen.

## Beschreibung

Die vorliegende Erfindung betrifft eine Vorrichtung und ein Verfahren zur Herstellung einer Vorrichtung zur katalytischen Erzeugung von Wasserstoff aus Kohlenwasserstoffen, die einen Katalysator mit im Katalysator ausgebildeten Zuführungen und Verteilungskanälen für Edukte und Ableitungen und Sammelkanälen für Produkte umfaßt.

Die Speicherung von Wasserstoff, der unter anderem als Brennstoff für Brennstoffzellen eingesetzt wird, ist technisch aufwendig. Wasserstoff wird deshalb oft in chemisch gebundenem Zustand, z.B. in Form von Kohlenwasserstoffen oder Alkoholen gespeichert und aus diesen Stoffen entsprechend dem jeweiligen Bedarf reformiert. Zur Gewinnung von Wasserstoff aus Kohlenwasserstoffen wird ein Eduktgemisch, das Kohlenwasserstoff und Wasser umfaßt, unter Wärmezufuhr an einem geeigneten Katalysator entlanggeführt. Wird beispielsweise Methanol als Ausgangsstoff verwendet, so erfolgt die Umsetzung der Edukte am Katalysator gemäß der Reaktionsgleichung CH₃OH + H₂O → CO₂ + 3H₂.

Aus der US-PS 5 674 301 ist eine Vorrichtung zum Reformieren von Wasserstoff bekannt, die ein poröses Substrat umfaßt, wobei in die Poren des porösen Substrates ein Katalysator für die katalytische Reformierung des Wasserstoffes eingelagert ist. Eine wasserstoffseparierende dünne Schicht ist auf inneren Oberflächen von zylindrischen Durchgängen vorgesehen, die in dem porösen Substrates ausgebildet sind.

Zur Erzeugung des Wasserstoffes werden dem Substrat Kohlenwasserstoffe und Wasserdampf über eine Stirnfläche oder eine Mantelfläche des Substrates zugeführt, wobei die zylindrischen Durchgänge im Substrat gegen einen Eintritt der Edukte abgedichtet sind. An dem Katalysatormaterial in den Poren des porösen Materials findet die katalytische Reformierung des Wasserstoffes statt. Das Produktgas, das Kohlendioxid und Wasserstoff enthält, verteilt sich in dem porösen Substrat und aufgrund der wasserstoffseparierenden dünnen Schicht kann nur der Wasserstoffanteil in die zylindrischen Durchgänge eintreten. Der Wasserstoff wird dann über die Durchgänge, die als Auslaßkanäle dienen, abgeführt. Nicht-Wasserstoffanteile von Edukt-und Produktgas werden über eine Ableitung aus dem Substrat abgeführt.

In einer anderen Ausführungsform ist der Katalysator außerhalb des porösen Substrates als honigwabenförmiger Katalysator ausgebildet. Unmittelbar an der Strömungsausgangsseite des honigwabenförmigen Katalysators ist das poröse Substrat mit den zylindrischen Durchführungen angeordnet, wobei das Substrat selbst keinen Katalysator enthält. Die Stirnfläche des porösen Substrates ist gegenüber dem honigwabenförmigen Katalysator abgedichtet, so daß aus dem Katalysator austretendes Produktgas nur in die Durchgänge strömen kann. Über die wasserstoffseparierende dünne Schicht der Durchgänge wird der Wasserstoff beim Eintritt ins poröse Substrat abgetrennt, wobei die Durchgänge als Auslaßkanäle für das Produktgas des Katalysators dienen.

In beiden Ausführungsformen bilden die zylindrischen Durchgänge im porösen Substrat ausschließlich Auslaßkanäle für den abgetrennten Wasserstoff oder das wasserstoffhaltige Produktgas des Katalysators. Eine größere Eintrittsfläche für das Eduktgas wird über die honigwabenförmige Struktur des Katalysators bereitgestellt.

Aus der deutschen Offenlegungsschrift DE 197 43 673 A1 der gleichen Anmelderin ist eine Vorrichtung zur Wasserstofferzeugung aus Kohlenwasserstoffen bekannt, die aus Katalysatorscheiben aufgebaut ist. Die Katalysatorscheiben werden durch Verpressen von Katalysatorpulver zu einem Formkörper hergestellt, wobei in dem Formkörper Kanäle zum Zuführen, Verteilen, Ableiten und Sammeln von Edukten bzw. Produkten vorgesehen sind.

Führungskanäle zum Zuführen und Ableiten von Edukten bzw. Produkten erstreckten sich senkrecht zur Katalysatorscheibe und sind in den einzelnen Katalysatorscheiben deckungsgleich angeordnet. In einer einzelnen Katalysatorscheibe sind nur Verteilungskanäle oder Sammelkanäle ausgebildet, die sich parallel zur Flächenausdehnung der jeweiligen Katalysatorscheibe erstrecken. Die Vorrichtung ist aus Katalysatorscheiben mit Verteilungskanälen für die Edukte und Katalysatorscheiben mit Sammelkanälen für die Produkte aufgebaut, die abwechselnd aufeinander gestapelt sind. Die Verteilungskanäle und Sammelkanäle der aufgestapelten Katalysatorscheiben sind senkrecht zueinander ausgerichtet, so daß die Führungskanäle, Verteilungskanäle und Sammelkanäle ein zueinander orthogonales System bilden.

Katalysatorscheiben, die in jeder Schicht das Zuführen, Verteilen, Sammeln und Abführen der Edukte bzw. Produkte ermöglichen, können durch Aufpressen und Aufsintern von weiteren Katalysatormaterial auf bereits gesinterte Katalysatorschichten als Katalysatorscheiben mit komplexen Strukturen gebildet werden.

Um eine hohe Ausbeute an Reaktionsprodukten zu erzielen, muß einerseits eine ausreichend lange Aufenthaltszeit der Edukte am Katalysator und andererseits eine hohe Durchströmungsrate durch den Katalysator gewährleistet sein. Im zitierten Stand der Technik sind dazu der honigwabenförmige Katalysator oder das aufwendige Kanalsystem im Katalysator zum Führen, Verteilen und Sammeln der Edukte bzw. Produkte vorgeschlagen. Dadurch wird der Aufbau der Vorrichtung kompliziert bzw. die einzelnen Bauteile zeigen eine komplexe Struktur, woraus ein relativ hoher Fertigungs- und Kostenaufwand resultiert.

Demgegenüber liegt der Erfindung die Aufgabe zugrunde, eine Vorrichtung zur katalytischen Wasserstofferzeugung zu schaffen, die unkompliziert aufgebaut ist und wenige unterschiedliche Bauteile umfaßt, die einfach strukturiert und herzustellen sind, sowie ein einfaches Herstellverfahren anzugeben.

Zur Lösung dieser Aufgabe wird eine Vorrichtung mit den Merkmalen des Anspruches 1 beziehungsweise ein Herstellverfahren mit den Merkmalen des Anspruchs 14 vorgeschlagen. Demnach sind Zuführungen und Verteilungskanäle für Edukte sowie Ableitungen und Sammelkanäle für Produkte aus einer Mehrzahl gleich strukturierter Kanäle gebildet, wobei zum Zuführen und Verteilen von Edukten Einlaßkanäle und zum Sammeln und Ableiten von Produkten Auslaßkanäle vorgesehen sind und die Funktion als Einlaßkanal oder Auslaßkanal durch jeweils invers angeordnete geschlossene und offene Kanalenden bestimmt ist und die Einlaß- und Auslaßkanäle sich im wesentlichen über den gesamten Katalysator erstrecken und in wechselseitig ineinandergreifender Anordnung vorgesehen sind. Durch die Verwendung von gleichen Kanalstrukturen zum Zuführen, Verteilen, Sammeln und Ableiten von Edukten bzw. Produkten wird eine sich wiederholende Struktur für alle Kanäle erreicht, wodurch der Aufbau der Vorrichtung bzw. von Bauelementen der Vorrichtung weitgehend homogenisiert wird. Aufgrund dieser Struktur, bei der sich Einlaßkanäle zum Zuführen und Verteilen sowie Auslaßkanäle zum Verteilen und Ableiten nur durch inverse geschlossene bzw. offene Enden unterscheiden, kann ein im hohen Maße symmetrischer Aufbau der erfindungsgemäßen Vorrichtung erreicht werden, d.h. eine einfach aufzubauende und herzustellende Konstruktion. Eine solche Konstruktion kann durch Einbeziehung der sich wiederholenden Strukturen vorteilhaft durch eine geringe Anzahl unterschiedlicher Bauglieder, die entsprechend der Struktur mehrfach aneinander angeordnet sind, verwirklicht werden.

Durch das Ineinandergreifen von Einlaß- und Auslaßkanälen wird einerseits eine große Eintritts- und Austrittsfläche am Katalysator für die Edukte bzw. Produkte geschaffen und andererseits eine gleichmäßige räumliche Verteilung von Edukten und Produkten für den gesamten Ablauf der katalytischen Reaktion, nämlich vom Zuführen der Edukte, über die Umwandlung am Katalysator bis hin zum Ableiten der Produkte, erreicht. Eine hohe Durchströmungsrate bei ausreichender Aufenthaltszeit wird über die auf diese Art und Weise geschaffenen großen Edukteintrittsflächen, Reaktionsflächen und Produktaustrittsflächen des Katalysators gewährleistet.

Bei einer vorteilhaften Ausgestaltung der Erfindung sind die gleich strukturierten Kanäle in Form von geraden Kanälen ausgebildet. Gerade Kanäle sind durch viele Herstellungsverfahren wie Bohren, Fräsen, Pressen einfach herzustellen und strömungstechnisch vorteilhaft.

Bei einer vorteilhaften Ausgestaltung der Erfindung sind die gleich strukturierten Kanäle zueinander parallel angeordnet. Dadurch kann eine besonders gleichmäßige und symmetrische Anordnung erreicht werden.

Bei einer vorteilhaften Weiterbildung der Erfindung sind die gleich strukturierten Kanäle senkrechte Kanäle. Demnach erstrecken sich die Einlaßkanäle im wesentlichen in Richtung der Schwerkraft. Bei einer Flüssigdosierung, z.B. über eine Sprühdüse, können die Einlaßkanäle vorteilhaft von oben mit Edukten beschickt werden. Dadurch wird eine gute Verteilung der Edukte auf der Katalysatoroberfläche erreicht. Während der Startphase kann sich z.B. flüssiges Methanol im Einlaßkanal eines Platin enthaltenden Katalysators sammeln und mit Luft reagieren und so den Katalysator aufheizen. Bei einem erwärmten Katalysator verdampft dann das flüssig dosierte Methanol im Einlaßkanal und verteilt sich dort gleichmäßig.

Bei einer weiteren vorteilhaften Ausgestaltung der Erfindung verjüngen sich die Ein- und Auslaßkanäle im Querschnitt vom offenen Ende zum geschlossenen Ende hin konisch. Dadurch wird für die Edukte, insbesondere bei einer Dosierung mittels Zerstäuben von Flüssigkeiten, eine größere Auftrefffläche im Einlaßkanal geschaffen bzw. eine bessere Verteilung auf der Oberfläche des Einlaßkanales ermöglicht.

Bei einer bevorzugten Ausführungsform der Erfindung ist die Vorrichtung im wesentlichen aus aneinander angeordneten Katalysatorscheiben mit gleicher Oberflächenstruktur aufgebaut, wobei die Mehrzahl gleich strukturierter Kanäle und die invers angeordneten offenen und geschlossenen Kanalenden als einseitig offene Oberflächenstruktur der Katalysatorscheibe ausgeformt sind und die Einlaß- und Auslaßkanäle durch Aneinanderfügen der Katalysatorscheiben zwischen Oberseite und Unterseite benachbarter Katalysatorscheiben gebildet werden. Die Vorrichtung ist in vorteilhafter Art und Weise aus gleichen Bauelementen aufgebaut, nämlich den Katalysatorscheiben, die einfach herzustellen sind und eine einfache Struktur haben.

Bei einer vorteilhaften Weiterbildung der Erfindung ist die Oberflächenstruktur der Katalysatorscheibe so gestaltet, daß die Mehrzahl gleich strukturierter Kanäle gleichmäßig beabstandet angeordnet ist und entweder eine ungerade Anzahl zu bildender Einlaßkanäle oder eine ungerade Anzahl zu bildender Auslaßkanäle aufweist. Dadurch kann eine abwechselnde Anordnung der Einlaß- und Auslaßkanäle auch in Richtung des Aneinanderfügens der Katalysatorscheiben erreicht werden, wenn beispielsweise jede zweite Katalysatorscheibe um 180° um die Hochachse der Katalysatorscheibe gedreht in der erfindungsgemäßen Vorrichtung angeordnet ist. Somit bedarf es keiner zwei Arten von Katalysatorscheiben mit versetzter Anordnung von Einlaß- bzw. Auslaßkanälen.

Bei einer bevorzugten Ausführungsform der Erfindung umfaßt die Vorrichtung eine oberer Scheibe und eine unterer Scheibe mit Öffnungen sowie einen mittleren Abschnitt mit beidseitig offenen Kanalabschnitten, wobei die Mehrzahl gleich strukturierter Kanäle durch die beidseitig offenen Kanalabschnitte und die offenen und geschlossenen Kanalenden durch die Öffnungen bzw. geschlossene Flächen in oberer und unterer Scheibe gebildet werden. Die erfindungsgemäße Vorrichtung ist in vorteilhafter Art und Weise grundsätzlich aus lediglich drei verschiedenen Baugruppen aufgebaut. Die Öffnungen der oberen und unteren Scheibe können durch einfache Bearbeitung wie Bohren oder Stanzen erzeugt oder schon bei der Herstellung z.B. beim Pressen der Scheiben mit ausgebildet werden.

In einer bevorzugten Ausführungsform der Erfindung ist der mittlere Abschnitt aus senkrecht zur oberen und unteren Scheibe angeordneten Katalysatorscheiben mit Oberflächenstruktur aufgebaut, wobei die beidseitig offenen Kanalabschnitte als einseitig offene Oberflächenstruktur der Katalysatorscheibe ausgeformt sind und durch Aneinanderfügen der Katalysatorscheiben zwischen Oberseite und Unterseite benachbarter Katalysatorscheiben ausgebildet sind. Durch eine solche Ausgestaltung lassen sich die offenen Kanalabschnitte durch eine einfache Oberflächenbearbeitung der Katalysatorscheibe erzeugen oder können schon bei der Herstellung mit ausgeformt werden. Die Länge der beidseitig offenen Kanalabschnitte ist durch die Höhe der senkrecht angeordneten Katalysatorschichten vorgegeben.

In einer weiteren bevorzugten Ausführungsform der Erfindung ist der mittlere Abschnitt aus parallel zur oberen und unteren Scheibe angeordneten Katalysatorscheiben aufgebaut, wobei die beidseitig offenen Kanalabschnitte in Form von deckungsgleichen Durchführungen in den Katalysatorscheiben ausgebildet sind. In vorteilhafter Art und Weise können dabei alle drei Baugruppen, nämlich obere Scheibe, untere Scheibe und Katalysatorscheiben nach dem gleichen Verfahren, z.B. Bohren oder Fräsen von Öffnungen bzw. Durchführungen, hergestellt werden. Dadurch wird der Fertigungsaufwand verringert.

In einer weiteren bevorzugten Ausführungsform der Erfindung umfaßt die Vorrichtung eine obere und eine untere Scheibe mit Öffnungen, Seitenwände sowie Röhren mit einseitig geschlossenem Ende, die an den Öffnungen der oberen und unteren Scheibe angebracht sind, wobei die Mehrzahl gleich strukturierter Kanäle durch die Röhren und die offenen und geschlossenen Kanalenden durch die Öffnungen in oberer und unterer Scheibe sowie die einseitig geschlossenen Enden der Röhren gebildet werden und wobei der von oberer Scheibe, unterer Scheibe und Seitenwänden aufgespannte Raum mit Katalysatormaterial gefüllt ist. Die Vorrichtung ist im wesentlichen aus wenigen verschiedenen Bauteilen, nämlich Scheiben, Röhren und Seitenwänden aufgebaut, die zudem konstruktiv einfach ausgeführt sind. Dabei müssen die Scheiben, Seitenwände und Röhren nicht aus Katalysatormaterial bestehen, sondern können aus verschiedensten Materialien hergestellt sein, die hinsichtlich Kosten und Fertigungstechnik ausgewählt werden. Schwierigkeiten, wie sie beim Bearbeiten von Katalysatormaterial bzw. beim Verbinden von Katalysatormaterial mit anderen Materialien auftreten, können so vermieden werden.

Bei einer bevorzugten Weiterbildung der Erfindung sind die Öffnungen in der Scheibe so angeordnet, daß bei Drehungen der Scheibe um bestimmte Winkel in der Scheibenebene sich die Öffnungen der nicht-gedrehten Scheibe mit denen der gedrehten Scheibe nicht decken und zueinander versetzte Anordnungen der Öffnungen bilden. Durch eine entsprechende Anordnung der Öffnungen, die hinsichtlich bestimmter Rotationswinkel nicht symmetrisch ist, können obere und untere Scheibe mit einer Scheibenart mit einer einzigen Anordnung der Öffnungen auf der Scheibe realisiert werden. Beim Einbau werden die Scheiben zueinander verdreht angeordnet, wodurch eine versetzte Anordnung der Öffnungen von oberer und unterer Scheibe erreicht wird.

Bei rechteckigen oder quadratischen Scheiben sind die Öffnungen so auf der Scheibe angeordnet, daß die Öffnungen bei Drehwinkeln von 180° bzw. 90° oder 180° zueinander versetzt sind. Bei kreisförmigen Scheiben ist der Drehwinkel nicht durch die äußere Form der Scheibe, sondern nur durch eine entsprechende Anordnung der Öffnungen vorgegeben.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im folgenden unter Bezugnahme auf die Zeichnungen näher erläutert.
- Fig. 1: zeigt in Draufsicht eine erste Ausführungsform der erfindungsgemäßen Vorrichtung, die aus mehreren Katalysatorscheiben aufgebaut ist.
- Fig. 2: zeigt in Draufsicht eine Katalysatorscheibe der in Fig. 1 gezeigten Vorrichtung.
- Fig. 3: zeigt in seitlicher Darstellung einen Schnitt durch die Katalysatorscheibe von Fig. 2 entlang der Linie A-A.
- Fig. 4: zeigt in seitlicher Darstellung einen Schnitt durch eine zweite Ausführungsform der erfindungsgemäßen Vorrichtung.
- Fig. 5: zeigt eine Draufsicht der zweiten Ausführungsform der erfindungsgemäßen Vorrichtung.
- Fig. 6: zeigt in seitlicher Darstellung einen Schnitt durch eine dritte Ausführungsform der erfindungsgemäßen Vorrichtung.
- Fig. 7: zeigt ein erstes Ausführungsbeispiel einer Vorrichtung, die zum Herstellen einer erfindungsgemäßen Vorrichtung eingesetzt werden kann, im Schnitt.
- Fig. 8: zeigt ein zweites Ausführungsbeispiel einer Vorrichtung, die zum Herstellen einer erfindungsgemäßen Vorrichtung eingesetzt werden kann, im Schnitt.
- Fig. 9: zeigt ein drittes Ausführungsbeispiel einer Vorrichtung, die zum Herstellen einer erfindungsgemäßen Vorrichtung eingesetzt werden kann, im Schnitt.

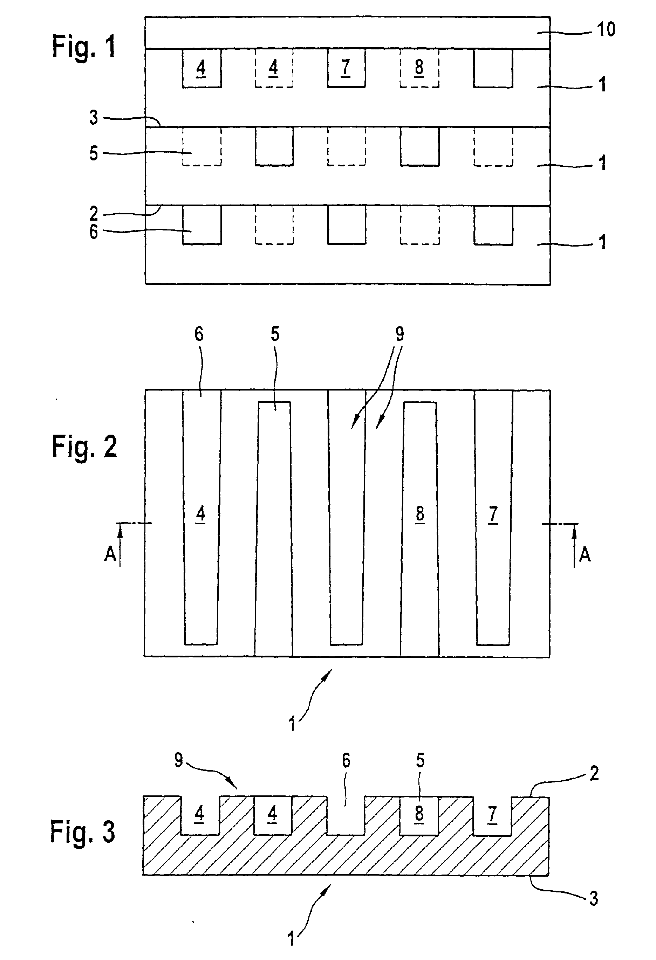

Fig. 1 zeigt in Draufsicht eine erste Ausführungsform der erfindungsgemäßen Vorrichtung, die aus mehreren Katalysatorscheiben 1, 10 aufgebaut ist. Die Katalysatorscheiben 1, 10 werden beispielsweise aus Katalysatorpulver durch Verpressen zu einem Formkörper und anschließendes Sintern hergestellt. Zum Aufbau der Vorrichtung werden identische Katalysatorscheiben 1 mit Oberflächenstruktur 9 aneinandergefügt. Eine Katalysatorscheibe 10 ohne Oberflächenstruktur ist als Abschluß der letzten Katalysatorscheibe 1 vorgesehen. Die Katalysatorscheiben 1, 10 werden bevorzugt durch Preßsintern miteinander verbunden. Aus der Oberflächenstruktur 9 bilden sich beim Aneinanderfügen der Katalysatorscheiben 1, 10 zwischen Oberseite 2 und Unterseite 3 benachbarter Katalysatorscheiben 1, 10 senkrechte Einlaß- und Auslaßkanäle 7, 8 aus, die parallel zueinander ausgerichtet sind.

Fig. 2 zeigt in Draufsicht eine Katalysatorscheibe 1 der in Fig. 1 gezeigten Vorrichtung. Die Oberflächenstruktur 9, die auf einer Oberseite 2 der Katalysatorscheibe 1 ausgebildet ist, kann mittels spannender Bearbeitung oder beim Verpressen der Katalysatorscheibe 1 erzeugt werden. Die Oberflächenstruktur 9 umfaßt eine Mehrzahl gleich strukturierter Kanäle 4, die ineinandergreifend angeordnet und gleichmäßig auf der Oberseite 2 verteilt sind. In Fig. 3 ist zur Verdeutlichung der Oberflächenstruktur 9 ein Schnitt durch die Katalysatorscheibe 1 der Fig. 1 entlang der Linie A-A dargestellt, wobei gleiche Bezugszeichen gleiche Elemente bezeichnen.

Die gleich strukturierten Kanäle 4 haben ein offenes und ein geschlossenes Ende 6, 5. Sie sind derart konisch geformt, daß sich der Querschnitt vom offenen zum geschlossenen Ende hin verjüngt. Die Kanäle 4 mit nach oben offenen und unten geschlossenen Kanalenden bilden Einlaßkanäle 7 und die Kanäle 4 mit nach unten offenen und oben geschlossenen Kanalenden bilden Auslaßkanäle 8. Die Einlaß- und Auslaßkanäle 7, 8 sind entlang der Längsrichtung der Katalysatorscheibe 1 alternierend angeordnet. Die Anzahl der Einlaß- oder der Auslaßkanäle 7, 8 auf einer Katalysatorscheibe 1 ist vorzugsweise ungerade. Durch eine um 180° gedrehte Anordnung jeder zweiten Katalysatorscheibe 1 kann damit auch eine alternierende Anordnung der Einlaß- und Auslaßkanäle 7, 8 entlang der Richtung des Aneinanderfügens der Katalysatorscheiben 1 erreicht werden.

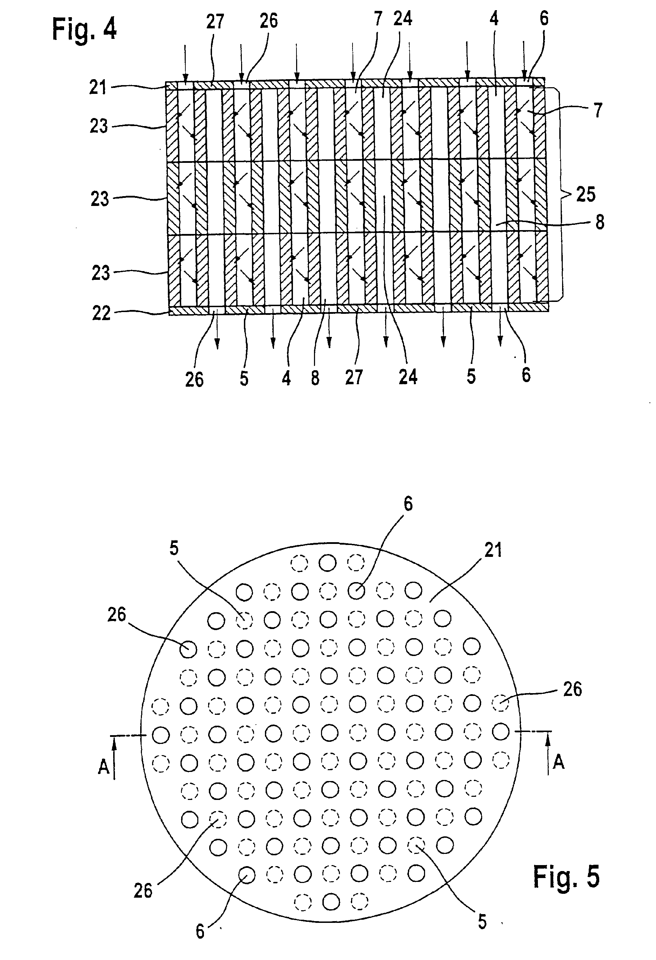

Fig. 4 zeigt in seitlicher Darstellung einen Schnitt durch eine zweite Ausführungsform der erfindungsgemäßen Vorrichtung. Die Vorrichtung ist aus einer oberen Scheibe 21, einer unteren Scheibe 22 und wenigstens einer mittleren Scheibe 23, die alle eine unterschiedliche Stärke haben können, aufgebaut. Die mittleren Scheiben 23 bestehen aus Katalysatormaterial und sind beispielsweise aus verpreßtem und gesintertem Katalysatorpulver hergestellt. Die obere Scheibe 21 und untere Scheibe 22 sind vorzugsweise auch aus Katalysatormaterial gefertigt. Ein Verbinden der Scheiben 21, 22, 23 kann durch Preßsintern erfolgen.

Die mittleren Scheiben 23 sind parallel zur oberen und unteren Scheibe 21, 22 ausgerichtet. In den mittleren Scheiben 23 sind senkrechte Durchführungen 24 vorgesehen, die gleichmäßig über das Volumen der Scheibe 23 verteilt sind. Die Durchführungen 24 mehrerer übereinander angeordneter mittlerer Scheiben 23 sind zueinander deckungsgleich und bilden beidseitige offene Kanalabschnitte 25.

In einer (nicht dargestellten) Ausführungsform werden die beidseitig offenen Kanalabschnitte zwischen Oberseite und Unterseite von senkrecht angeordneten Scheiben mit entsprechender Oberflächenstruktur ausgebildet. Dazu sind auf der Oberseite der Scheibe gerade und parallel ausgerichtete Vertiefungen vorgesehen, die sich über die ganze Breite der Scheibe erstrecken.

In der oberen Scheibe 21 und der unteren Scheibe 22 sind Öffnungen 26 angeordnet, die zueinander nicht deckungsgleich sind. Diese können durch Bohren, Stanzen oder unmittelbar beim Pressen der Scheiben erzeugt werden. Die Öffnungen 26 bzw. entsprechende geschlossene Flächen 27 begrenzen die beidseitig offenen Kanalabschnitte 25 der mittleren Scheiben 23. Dadurch werden Kanäle 4 mit einseitig offenen und geschlossenen Kanalenden 6, 5 geschaffen, nämlich Einlaß- und Auslaßkanäle 7, 8. Die Anordnung der Öffnungen 25 ist so gewählt, daß sich Einlaß- und Auslaßkanäle 7, 8 miteinander abwechseln, d.h. ein Einlaßkanal 7 von mehreren Auslaßkanälen 8 umgeben ist und umgekehrt.

Die Anordnung der Öffnungen 26 kann auch so gestaltet sein, daß die Öffnungen 26 beim Drehen der Scheibe in der Scheibenebene zumindest bei einem bestimmten Drehwinkel nicht deckungsgleich aufeinander abgebildet werden. Bei einer solchen Anordnung der Öffnungen 26 kann für die obere und untere Scheibe 21, 22 eine einzige Scheibenart verwendet werden, wobei die Funktion als obere und untere Scheibe 21, 22 durch entsprechend zueinander gedrehten Einbau der Scheiben erreicht wird.

Fig. 5 zeigt eine Draufsicht auf die zweite Ausführungsform der erfindungsgemäßen Vorrichtung. Der in Fig. 4 gezeigte Schnitt durch die erfindungsgemäße Vorrichtung ist entlang der Linie A-A in Fig. 5 ausgeführt. Der Querschnitt der Vorrichtung ist im vorliegenden Fall kreisförmig, kann aber wie in der ersten Ausführungsform auch eckig sein. Die Öffnungen 26 der oberen Scheibe 21 bzw. die offenen Kanalenden 6 der Einlaßkanäle 7 sind von oben sichtbar, wohingegen die Öffnungen 26 der unteren Scheibe 22 bzw. die offenen Kanalenden 6 der Auslaßkanäle 8 verdeckt sind.

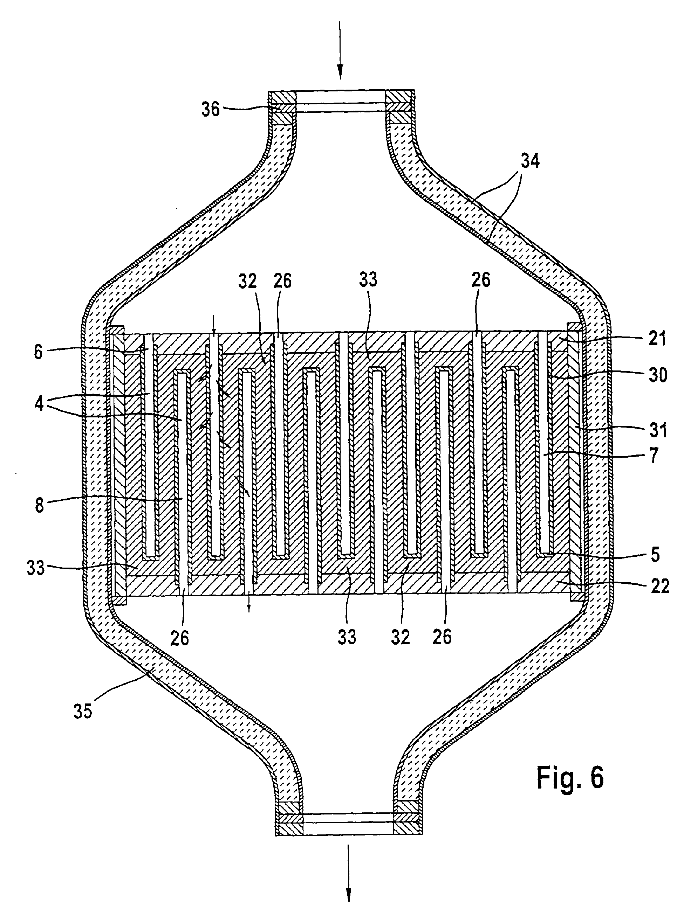

Fig. 6 zeigt in seitlicher Darstellung einen Schnitt durch eine dritte Ausführungsform der erfindungsgemäßen Vorrichtung. Die Vorrichtung umfaßt eine obere und eine untere Scheibe 21, 22, Seitenwände 31 und Röhren 30. Die obere Scheibe 21 und die untere Scheibe 22 sind zueinander beabstandet an den Seitenwänden 31 angebracht und spannen gemeinsam einen Raum 32 auf.

Die Röhren 30, welche die gleich strukturierten Kanäle 4 bilden, sind einseitig geschlossen. In den oberen und unteren Scheiben 21, 22 sind Öffnungen 26 ausgebildet. Die Röhren 30 sind im Inneren des Raumes 32 angeordnet und so an den Scheiben 21, 22 befestigt, daß die Öffnungen 26 mit offenen Enden 6 der Röhren 30 fluchten. Der verbleibende Innenraum ist mit Katalysatormaterial 33 ausgefüllt, z.B. durch Einfüllen eines Katalysatorpulvers. Die Scheiben 21, 22 und die Röhren 30 bestehen aus porösem Material, wobei die Porengröße halb so klein sein sollte wie die Korngröße des Katalysatormaterials. Die erfindungsgemäße Vorrichtung ist in einem doppelwandigen Gehäuse 34 befestigt. Der Zwischenraum der Gehäusewände 34 ist zur Wärmeisolierung mit einem Isolierstoff 35, z.B. Blähglasgranulat gefüllt. Am oberen und unteren Ende des Gehäuses sind Befestigungsmittel 36 zum Anschließen vorgesehen.

Beim Betrieb der erfindungsgemäßen Vorrichtung werden Edukte, z.B. Methanol und Wasser von oben über eine (nicht dargestellte) Düse in feiner Versprühung zugeführt. Damit wird eine gleichmäßige Verteilung der Edukte erreicht. Die Edukte werden dem pulverförmigen Katalysatormaterial bzw. dem in Scheibenform gepreßten Katalysator über die Einlaßkanäle 7 und zum Teil auch über die obere Scheibe 21 zugeführt. Die Reaktionsprodukte insbesondere Wasserstoff werden über die Auslaßkanäle 8 gesammelt und abgeführt. Die Strömung von Edukten und Produkten ist in den Figg. 4 und 6 durch Pfeile angedeutet. Die erfindungsgemäße Vorrichtung eignet sich besonders auch als Kaltstartkomponente, wobei durch Flüssigdosierung, Schwerkraft und gute Durchströmbarkeit die Startzeit positiv beeinflußt wird. Die Ausführungsformen der erfindungsgemäßen Vorrichtung können zum Aufbau eines Mehrstufenreaktors verwendet werden.

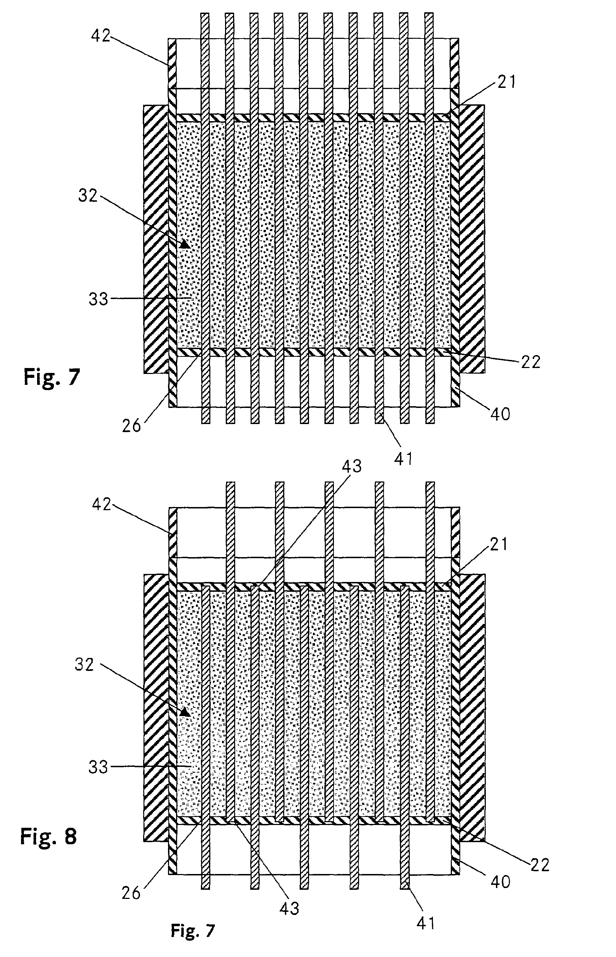

Geeignete Vorrichtungen zum Herstellen eines erfindungsgemäßen Katalysatorkörpers zeigen die Fig. 7 bis 9, wobei wiederum gleiche Teile mit identischen Bezugszeichen gekennzeichnet sind. In einem Hohlkörper 40 sind in axialer Richtung beabstandet voneinander eine obere Scheibe 21 und eine untere Scheibe 22 angeordnet, wobei beide Scheiben 21, 22 jeweils eine Mehrzahl von Öffnungen 26 aufweisen. Abweichend von der dargestellten Hohlzylinderform kann der Hohlkörper 40 auch beliebige andere Querschnittsformen, beispielsweise einen quadratischen Querschnitt aufweisen. Entsprechend würden dann die Scheiben 21, 22 anstelle einer Kreisform eine quadratische Querschnittsform aufweisen.

In jeweils korrespondierende Öffnungen 26 in den Scheiben 21, 22 sind Formkörper 41 formschlüssig eingesteckt, die sich in axialer Richtung über den Raum 32 hinaus erstrecken. Der verbliebene Raum zwischen den beiden Scheiben 21, 22 wird mit Katalysatormaterial 33 befüllt. Anschließend wird das Katalysatormaterial verpresst. Hierzu ist entweder eine Scheibe 21, 22 fest mit dem Hohlkörper 40 verbunden, während auf die andere Scheibe eine Anpresskraft einwirkt. Oder beide Scheiben 21, 22 sind beweglich gegenüber dem Hohlkörper 40, wobei dann auf beide Scheiben 21, 22 eine Anpresskraft einwirkt. Der zweite Fall weist den Vorteil auf, daß eine gleichmäßigere Vorverdichtung über den gesamten Raum 32 erreicht werden kann. Beim Verpressen können sich die Scheiben 21, 22 relativ zu den Formkörpern 41 bewegen.

Nach dem Verpressen werden die Formkörper 41 entfernt, so daß jeweils Kanäle 4 entstehen. Zur Ausbildung von Einlaß- bzw. Auslaßkanälen 7, 8 müssen anschließend noch durch geeignete Maßnahmen jeweils ein Kanalende 5 im Bereich der Scheiben 21, 22 geschlossen werden. Hierzu kann beispielsweise jeder Scheibe 21, 22 eine entsprechende Blende (nicht dargestellt) zugeordnet werden, die jeweils komplementäre Öffnungen 26 in den Scheiben 21, 22 verschließen.

Als Formkörper 41 können beispielsweise einfache Rohrkapillare oder Rundmaterialien aus Stahl verwendet werden, die nach dem Verpressen in axialer Richtung aus der Vorrichtung herausgezogen werden. Die äußere Form dieser Formkörper 41 bestimmt hierbei die Form der Kanäle 4. Somit ist es möglich, neben der Kreisform auch beliebige andere Querschnittsformen für die Formkörper 41 vorzusehen, wobei lediglich die Querschnittsform der Öffnungen 26 auf die Querschnittsform der Formkörper 41 abgestimmt sein muß. Weiterhin ist es möglich, daß Formkörper 41 mit unterschiedlicher Querschnittsform verwendet werden. Beispielsweise im Randbereich eine andere Form, als im zentralen Bereich. Auch kann die Querschnittsform der Formkörper 41 in axialer Richtung sich ändern. Es muß lediglich sichergestellt sein, daß die Formkörper zumindest in einer axialen Richtung durch die Öffnungen 26 gezogen werden können. Als weitere Option kann vorgesehen werden, daß die Formkörper zur Lagefixierung einen Anschlag (nicht dargestellt) aufweisen, der beispielsweise beim Einsetzen auf der dem Raum 32 abgewandten Seite einer der Scheiben 21, 22 zur Anlage kommt.

Alternativ können die Formkörper 41 auch aus einem Material bestehen, welches geeignet ist, den Formkörper 41 nach dem Verpressen auszuschmelzen. Hierzu muß das Material der Formkörper 41 eine Schmelztemperatur aufweisen, bei welchem das Katalysatormaterial 33 noch nicht beschädigt wird. In diesem Fall kann optional auch auf der Außenfläche der Formkörper 41 eine geeignete Diffusionsschicht aufgebracht werden, welche beim Ausschmelzen auf den Innenflächen der Kanäle 4 verbleibt und im späteren Betrieb der Vorrichtung die Diffusionsgeschwindigkeit der Medien von den Kanälen 4 in das Katalysatormaterial 33 bestimmt. Vorteilhaft kann hierbei die Schichtdicke der Diffusionsschicht über die axiale Erstreckung der Formkörper 41 variieren. Die Verwendung schmelzfähiger Formkörper 41 weist weiterhin den Vorteil auf, daß die möglichen Querschnittsformen der Formkörper 41 weniger eingeschränkt ist, da die Formkörper 41 nach dem Verpressen nicht durch die entsprechenden Öffnungen 26 entfernt werden müssen. Das heißt, die Formkörper 41 können auch eine gegenüber der Form der Öffnungen 26 überstehende Querschnittsform aufweisen. Die Größe der Öffnungen 26 muß lediglich so gewählt werden, daß das Material der Formkörper 41 nach dem Verpressen noch ausreichend ausgeschmolzen werden kann.

Die Scheiben 21, 22 selbst können ebenfalls aus Katalysatormaterial oder aus einem anderen Material, zum Beispiel Stahl, bestehen. Die Anpresskräfte werden vorzugsweise mit einem geeigneten Stempel ein- oder beidseitig eingebracht. Der Hohlkörper 40 kann beispielsweise als Seitenwand 31 verwendet werden und somit einen Teil der Vorrichtung zur katalytischen Wasserstofferzeugung bilden. Alternativ kann der Hohlkörper 40 aber auch Bestandteil der Herstellvorrichtung sein, so daß der Katalysatorkörper nach dem Verpressen aus dem Hohlkörper 40 entnommen und später in ein geeignetes Gehäuse 34 eingesetzt wird. Wird der Hohlkörper 40 als Seitenwand 31 verwendet, so wird dieser vorzugsweise zur Gewichtsreduzierung der fertigen Vorrichtung eine möglichst dünne Wandstärke aufweisen. Zur Aufnahme der Anpresskräfte kann in diesem Fall eine dickwandige Matrize 42 vorgesehen werden, die während des Verpressens um den Hohlkörper 40 gelegt und später wieder entfernt werden kann. Vorzugsweise besteht diese Matrize 42 aus zwei Teilen, die miteinander verschraubt werden.

Um die Kanäle 4 vor Beschädigungen zu schützen können diese nach dem Entfernen der Formkörper 41 gegebenenfalls auch noch mit einem porösen Körper, beispielsweise einer Rohrkapillare aus Aluminiumoxid (Al2O3), bestückt werden. Weiterhin kann zum Einfüllen des Katalysatormaterials 33 im Anschluß an den Hohlkörper 40 ein Ring 42 vorgesehen sein.

Mit diesem Verfahren kann eine Vorrichtung zur Wasserstofferzeugung mit hohem Katalysatoranteil bezogen auf die Gesamtmasse der Vorrichtung, mit verringertem Gesamtvolumen und verringerter Gesamtmasse hergestellt werden. Außerdem wird die Herstellung einfacher, weil die Zahl der benötigten Einzelteile relativ gering ist und weil es nur weniger Verfahrensschritte bedarf.

In der Ausführungsform gemäß Fig. 8 sind abweichend von Fig. 7 in den Scheiben 21, 22 keine identischen Öffnungen 26 vorgesehen. Vielmehr sind in beiden Scheiben 21, 22 abwechselnd neben Öffnungen 26 auch noch auf den dem Raum 32 zugewandten Oberflächen der Scheiben 21, 22 eingebrachte Vertiefungen 43 vorgesehen, wobei die Öffnungen 26 bzw. Vertiefungen 43 auf den beiden Scheiben 21 und 22 komplementär zueinander angeordnet sind. Dadurch werden die Formkörper 41 jeweils nur durch eine Öffnung 26 in einer der Scheiben 21, 22 formschlüssig eingesteckt, während sie an der gegenüberliegenden Scheibe 22, 21 lediglich in einer Vertiefung 43 fixiert werden. Dadurch bilden die Vertiefungen jeweils gleichzeitig auch das geschlossene Ende 5 des zugehörigen Kanals 4. Ein späteres Abdichten ist daher nicht mehr notwendig. Beim Verpressen bleibt somit jeder Formkörper 41 an einer der Scheiben 21, 22 fixiert, während er sich relativ zur anderen Scheibe 22, 21 bewegt. Dabei ist es wieder möglich, daß eine oder auch beide Scheiben 21, 22 bewegbar sind, und somit die Anpresskraft einseitig oder auch beidseitig eingebracht werden kann. Prinzipiell ist es auch möglich, beide Verfahren zu kombinieren, wobei dann ein Teil der Formkörper 41 einseitig in zugehörigen Vertiefungen 43 fixiert werden, während andere Formkörper 41 beidseitig in Öffnungen 26 eingesteckt werden.

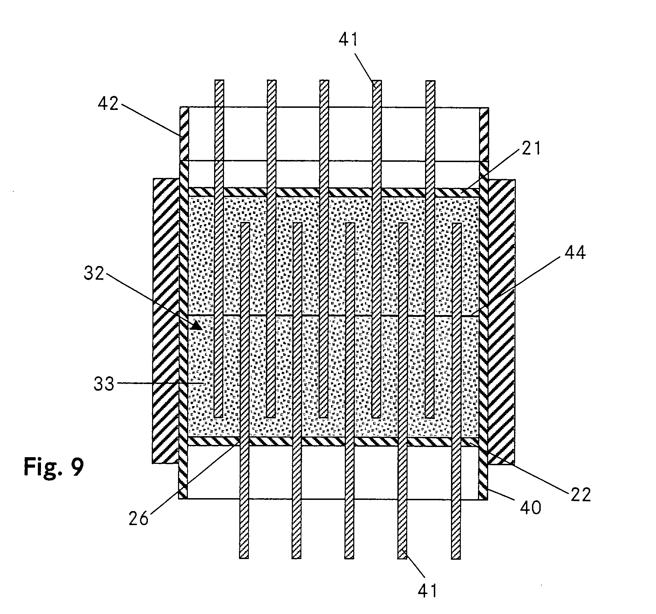

In einem dritten Ausführungsbeispiel gemäß Fig. 9 erstrecken sich die Formkörper 41 jeweils in axialer Richtung nur über einen großen Teil des Raumes 32. Sie werden hierzu durch Öffnungen 26 in einer der beiden Scheiben 21, 22 gesteckt und erstrecken sich jedoch nicht vollständig bis zur gegenüberliegenden Scheibe 22, 21. Vielmehr werden die Formkörper 41 zusätzlich nur durch eine geeignete Maßnahme innerhalb des Raumes 32 in ihrer Lage fixiert, beispielsweise mit Hilfe eines im wesentlichen mittig zwischen den beiden Scheiben 21, 22 angeordneten Drahtgitters 44 oder ähnlichem. Dieses Verfahren hat den Vorteil, daß das jeweilige geschlossene Ende 5 der Kanäle 4 unmittelbar durch Katalysatormaterial gebildet wird, so daß die Scheiben 21, 22 nur für die Herstellung, nicht aber für den Betrieb der Vorrichtung benötigt werden und auch auf zusätzliche Abdichtungen verzichtet werden kann.

## Patentansprüche

1. Vorrichtung zur katalytischen Wasserstofferzeugung aus Kohlenwasserstoffen umfassend einen Katalysator mit im Katalysator ausgebildeten Zuführungen und Verteilungskanälen für Edukte sowie Ableitungen und Sammelkanälen für Produkte
**dadurch gekennzeichnet,**
**daß** die Zuführungen und Verteilungskanäle für die Edukte sowie die Ableitungen und Sammelkanäle für die Produkte aus einer Mehrzahl gleich strukturierter Kanäle (4) gebildet sind, wobei Einlaßkanäle (7) zum Zuführen und Verteilen von Edukten und Auslaßkanäle (8) zum Sammeln und Ableiten von Produkten vorgesehen sind und die Funktion als Einlaßkanal (7) oder Auslaßkanal (8) durch jeweils invers angeordnete geschlossene (5) und offene Kanalenden (6) bestimmt ist und die Einlaß- und Auslaßkanäle (7, 8) sich im wesentlichen über den gesamten Katalysator erstrecken und in wechselseitig ineinandergreifender Anordnung vorgesehen sind.

2. Vorrichtung nach Anspruch 1,
**dadurch gekennzeichnet,**
**daß** die gleich strukturierten Kanäle (4) in Form von geraden Kanälen ausgebildet sind.

3. Vorrichtung nach Anspruch 1 oder 2,
**dadurch gekennzeichnet,**
**daß** die gleich strukturierten Kanäle (4) zueinander parallel angeordnet sind.

4. Vorrichtung nach einem der Ansprüche 1 bis 3,
**dadurch gekennzeichnet,**
**daß** die gleich strukturierten Kanäle (4) senkrechte Kanäle sind.

5. Vorrichtung nach einem der Ansprüche 1 bis 4,
**dadurch gekennzeichnet,**
**daß** sich die Ein- und Auslaßkanäle (7, 8) im Querschnitt vom offenen Ende (5) zum geschlossenen Ende (6) hin konisch verjüngen.

6. Vorrichtung nach einem der Ansprüche 1 bis 5,
**dadurch gekennzeichnet,**
**daß** die Vorrichtung im wesentlichen aus aneinander angeordneten Katalysatorscheiben (1) mit gleicher Oberflächenstruktur (9) aufgebaut ist, wobei die Mehrzahl gleich strukturierter Kanäle (4) und die invers angeordneten offenen (6) und geschlossenen Kanalenden (5) als einseitig offene Oberflächenstruktur (9) der Katalysatorscheibe (1) ausgeformt sind und die Einlaß- und Auslaßkanäle (7, 8) durch Aneinanderfügen der Katalysatorscheiben zwischen Oberseite (2) und Unterseite (3) benachbarter Katalysatorscheiben (1) gebildet werden.

7. Vorrichtung nach Anspruch 6,
**dadurch gekennzeichnet,**
**daß** die Oberflächenstruktur (9) der Katalysatorscheibe (1) so gestaltet ist, daß die Mehrzahl gleich strukturierter Kanäle (4) gleichmäßig beabstandet angeordnet sind und entweder eine ungerade Anzahl zu bildender Einlaßkanäle (7) oder eine ungerade Anzahl zu bildender Auslaßkanäle (8) aufweist.

8. Vorrichtung nach einem der Ansprüche 1 bis 5,
**dadurch gekennzeichnet,**
**daß** die Vorrichtung eine obere Scheibe (21) und eine untere Scheibe (22) mit Öffnungen (26) sowie einen mittleren Abschnitt mit beidseitig offenen Kanalabschnitten (25) umfaßt, wobei die Mehrzahl gleich strukturierter Kanäle (4) durch die beidseitig offenen Kanalabschnitte (25) und die offenen (6) und geschlossenen Kanalenden (5) durch die Öffnungen (26) und geschlossene Flächen (27) in oberer (21) und unterer Scheibe (22) gebildet werden.

9. Vorrichtung nach Anspruch 8,
**dadurch gekennzeichnet,**
**daß** der mittlere Abschnitt aus senkrecht zur oberen (21) und unteren Scheibe (22) angeordneten Katalysatorscheiben (1) mit Oberflächenstruktur (9) aufgebaut ist, wobei die beidseitig offenen Kanalabschnitte (5) als einseitig offene Oberflächenstruktur (9) der Katalysatorscheibe (1) ausgeformt sind und durch Aneinanderfügen der Katalysatorscheiben (1) zwischen Oberseite (2) und Unterseite (1) benachbarter Katalysatorscheiben (1) ausgebildet werden.

10. Vorrichtung nach Anspruch 8,
**dadurch gekennzeichnet,**
**daß** der mittlere Abschnitt aus parallel zur oberen (21) und unteren Scheibe (22) angeordneten Katalysatorscheiben (23) aufgebaut ist, wobei die beidseitig offenen Kanalabschnitte (25) in Form von deckungsgleichen Durchführungen (24) in den Katalysatorscheiben (25) ausgebildet sind.

11. Vorrichtung nach einem der Ansprüche 1 bis 5,
**dadurch gekennzeichnet,**
**daß** die Vorrichtung eine obere Scheibe (21) und eine untere Scheibe (22) mit Öffnungen (26), Seitenwände (31) sowie und Röhren (30) mit einseitig geschlossenem Ende, die an den Öffnungen (26) der oberen (21) und unteren Scheibe (22) angebracht sind, umfaßt, wobei die Mehrzahl gleich strukturierter Kanäle (4) durch die Röhren (30) und die offenen (6) und geschlossenen Kanalenden (5) durch die Öffnungen (26) in oberer (21) und unterer Scheibe (22) und die einseitig geschlossenen Enden der Röhren (30) gebildet werden und der von oberer Scheibe (21), unterer Scheibe (22) und Seitenwänden (31) aufgespannte Raum (32) mit Katalysatormaterial (33) gefüllt ist.

12. Vorrichtung nach Anspruch 11,
**dadurch gekennzeichnet,**
**daß** die oberer Scheibe (21), die unterer Scheibe (22) und/oder die Röhren (30) aus porösem Material sind.

13. Vorrichtung nach einem der Ansprüche 8 bis 12,
**dadurch gekennzeichnet,**
**daß** die Öffnungen (26) in der Scheibe (21, 22) so angeordnet sind, daß bei Drehungen der Scheibe (21, 22) um bestimmte Winkel in der Scheibenebene sich die Öffnungen (26) der nicht-gedrehten Scheibe mit denen der gedrehter Scheibe nicht decken und zueinander versetzte Anordnungen der Öffnungen (26) bilden.

14. Verfahren zur Herstellung einer Vorrichtung zur katalytischen Wasserstofferzeugung aus Kohlenwasserstoffen umfassend einen Katalysator mit im Katalysator ausgebildeten Zuführungen und Verteilungskanälen für Edukte sowie Ableitungen und Sammelkanälen für Produkte, wobei die Zuführungen und Verteilungskanäle für die Edukte sowie die Ableitungen und Sammelkanäle für die Produkte aus einer Mehrzahl gleich strukturierter Kanäle (4) gebildet sind,
**dadurch gekennzeichnet,**
- **daß** ein Hohlkörper (40) vorgesehen ist,
- **daß** zwei jeweils mit einer Mehrzahl von Öffnungen (26) versehene Scheiben (21, 22) vorgesehen sind,
- **daß** die Scheiben (21, 22) in axialer Richtung beabstandet voneinander in dem Hohlkörper (40) angeordnet werden, wobei zumindest eine der Scheiben (21, 22) in axialer Richtung in dem Hohlkörper (40) bewegbar ist,
- **daß** die Scheiben (21, 22) jeweils in radialer Richtung am Innenumfang des Hohlkörpers (40) anliegen,
- **daß** Formkörper (41) vorgesehen sind, die sich im wesentlichen in axialer Richtung erstrecken und jeweils in mindestens eine der Öffnungen (26) formschlüssig eingesteckt sind,
- **daß** der verbleibende Raum zwischen den beiden Scheiben (21, 22) mit einem Katalysatormaterial (33) befüllt und anschließend verpresst wird,
- **daß** zur Ausbildung der Kanäle (4) die Formkörper (41) nach dem Verpressen entfernt werden.

15. Herstellverfahren nach Anspruch 14,
**dadurch gekennzeichnet,**
**daß** zwei identische Scheiben (21, 22) vorgesehen sind, daß die Formkörper (41) jeweils in korrespondierende Öffnungen (26) in beiden Scheiben (21, 22) formschlüssig eingesteckt sind und
**daß** die Kanäle (4) nach dem Verpressen und entfernen der Formkörper (41) an jeweils einer der Kanalenden (5) abgedichtet werden.

16. Herstellverfahren nach Anspruch 14,
**dadurch gekennzeichnet,**
**daß** in beiden Scheiben (21, 22) abwechselnd neben Öffnungen (26) auf den dem Raum (32) zugewandten Oberflächen der Scheiben (21, 22) eingebrachte Vertiefungen (43) vorgesehen sind, wobei die Öffnungen (26) beziehungsweise die Vertiefungen (43) auf den beiden Scheiben (21, 22) komplementär zueinander angeordnet sind,
**daß** die Formkörper 41 jeweils durch eine Öffnung (26) in nur einer der Scheiben (21, 22) formschlüssig eingesteckt wird, während er an der gegenüberliegenden Scheibe (22, 21) in einer Vertiefung (43) fixiert ist.

17. Herstellverfahren nach Anspruch 14,
**dadurch gekennzeichnet,**
**daß** die Formkörper 41 jeweils durch eine Öffnung (26) in nur einer der Scheiben (21, 22) formschlüssig eingesteckt wird, daß sich die Formkörper (41) nicht bis in den Bereich der gegenüberliegenden Scheibe (22, 21) erstrecken, und
**daß** die Formkörper (41) vor dem Einfüllen von Katalysatormaterial (33) im Raum (32) lagefixiert werden.
